# FASCICULE DE BREVET EUROPEEN

(11) **EP 1 803 276 B1**
(45) Date de publication et mention de la délivrance du brevet: **07.01.2009**
(21) Numéro de dépôt: 05802749.1
(22) Date de dépôt: 12.09.2005
(51) Int. Cl.: H04L 29/12, H04L 29/06

(54) **Procédé d'adressage d'un réseau IP se connectant à un autre réseau IP**
Verfahren zur Adressierung eines IP-Netzwerks, das mit einem anderen IP-Netwerk verbindet
Method for addressing an IP network connecting to another IP network

(30) Priorité: 20.10.2004 FR 0411168
(43) Date de publication de la demande: 04.07.2007
(73) Titulaire: FRANCE TELECOM, 75015 Paris (FR)
(72) Inventeur: BINET, David, F-14550 Blainville-Sur-Orne (FR); NOISETTE, Yoann, F-14320 May Sur Orne (FR)
(74) Mandataire: Joly, Jean-Jacques
(86) Numéro de dépôt international: PCT/FR2005/002256
(87) Numéro de publication internationale: WO 2006/042920

(56) Documents cités:
- TROAN O ET AL: "IPV6 PREFIX OPTIONS FOR DYNAMIC HOST CONFIGURATION PROTOCOL (DHCP) VERSION 6" RFC EDITOR, décembre 2003 (2003-12), pages 1-19, XP002293412
- PAAKKANEN P ET AL: "IPv6 prefix delegation-based addressing solution for a mobile personal area network" MULTIMEDIA SIGNAL PROCESSING, 2002 IEEE WORKSHOP ON 9-11 DEC. 2002, PISCATAWAY, NJ, USA,IEEE, 19 mai 2003 (2003-05-19), pages 819-824, XP010642470 ISBN: 0-7803-7713-3
- HABERMAN, MARTIN: "draft-haberman-ipngwg-auto-prefix-02.txt: Automatic Prefix Delegation Protocol for Internet Protocol Version 6" INTERNET DRAFT PUBLICATION, février 2002 (2002-02), pages 1-10, XP015001066
- ERNST T ET AL: "Mobile Networks Support in Mobile IPv6 (Prefix Scope Binding Updates)" INTERNET DRAFTS ARCHIVE, mars 2002 (2002-03), pages 1-22, XP002215648

## Description

La présente invention concerne l'accès à des réseaux IP à partir de terminaux fixes ou mobiles.

Elle s'applique notamment, mais non exclusivement aux réseaux de terminaux en situation de mobilité, et plus particulièrement à la connexion entre ce réseau et un réseau IP hôte. Cette situation de mobilité implique un changement de point de raccordement à un réseau IP, celui-ci pouvant être public comme le réseau Internet.

Il existe des mécanismes permettant à un réseau IP fixe se connectant à un autre réseau IP fixe appelé "hôte" de bénéficier d'un espace d'adressage cohérent avec celui du réseau hôte.

Il existe également des mécanismes dérivés du protocole "Mobile IP" permettant à un terminal ou un réseau IP en situation de mobilité se raccordant temporairement à un réseau IP fixe de maintenir ses connexions et d'être joint par l'intermédiaire de ce réseau.

Lorsque le réseau mobile est considéré comme un visiteur au sein d'un réseau IP hôte auquel il se connecte et qu'il n'est pas souhaitable que le réseau hôte lui attribue un espace d'adresses issu de son propre plan d'adressage, on applique des mécanismes de mobilité à la connexion entre les deux réseaux. Lorsque au contraire, le réseau mobile qui se connecte à un réseau IP hôte peut bénéficier d'un espace d'adressage du réseau hôte, il devient partie intégrante de ce dernier par ce que l'on appelle une délégation de préfixe d'adresses IP.

La délégation de préfixe consiste à attribuer à un réseau IP un préfixe d'adresses IP à partir duquel les interfaces de terminaux connectés à ce réseau IP pourront configurer des adresses. Aujourd'hui, la délégation de préfixe est notamment envisagée pour les réseaux IPv6 connectés temporairement ou non à un fournisseur d'accès. Pour assurer la délégation de préfixe, on a ainsi déjà proposé plusieurs protocoles, tels que DHCP (Dynamic Host Configuration Protocol) et RA Proxy (Router Advertisement Proxy).

Ceci est divulgué par exemple par RFC 3633.

La mobilité des réseaux constitue une extension de la mobilité des terminaux. Un terminal doté de la fonction Mobile IP peut rester connecté, être joignable et conserver ses connexions tout en se déplaçant d'un réseau IP à un autre, grâce à la mise en oeuvre dans son réseau d'origine (auquel le terminal est connecté) d'une fonction "Home Agent" qui gère les connexions entre le terminal et le réseau visité. La mobilité d'un réseau reprend ce principe, appliqué à un routeur, pour permettre à tous les terminaux connectés à ce routeur en situation de mobilité de bénéficier des mêmes caractéristiques en terme de connexion et de joignabilité, lorsque le réseau se déplace et change de point de connexion avec le réseau hôte (réseau IP public), et ce indépendamment du point d'accès au réseau hôte. Des travaux de spécification de la mobilité des réseaux sont actuellement effectués par le groupe Nemo à l'IETF (http://www.ietf.org).

Il s'avère que les spécifications en cours concernent exclusivement soit les réseaux fixes, soit les réseaux en situation de mobilité. En effet, il n'existe pas aujourd'hui de solution permettant à un réseau en situation de mobilité, souhaitant se connecter à un réseau IP hôte, de bénéficier, selon les circonstances, soit des mécanismes de mobilité des réseaux, soit des mécanismes de délégation de préfixe comme les réseaux SOHO (Small Office / Home Office) se connectant à leur fournisseur d'accès.

Il existe pourtant de nombreuses situations dans lesquelles il serait particulièrement avantageux pour un réseau IP se connectant à un autre réseau IP de pouvoir bénéficier selon les circonstances de l'un ou l'autre de ces mécanismes.

Une telle situation peut par exemple se produire dans le cas d'un utilisateur disposant d'un véhicule équipé d'un réseau IP. Lorsque l'utilisateur rentre son véhicule dans son garage, il peut souhaiter que le réseau IP de son véhicule fasse partie intégrante du réseau IP domestique installé dans son domicile, et ainsi autoriser une délégation de préfixe d'adresses du routeur domestique vers le routeur du réseau installé dans son véhicule. Les terminaux embarqués à bord du véhicule sont ainsi joignables à partir du réseau domestique grâce à une adresse IP cohérente avec le plan d'adressage de ce dernier, sans mettre en oeuvre de mécanismes de mobilité. Par contre si un visiteur gare son véhicule équipé d'un réseau IP à proximité du domicile de l'utilisateur, celui-ci peut ne pas souhaiter que le visiteur puisse bénéficier d'une délégation de préfixe d'adresses IP du réseau domestique, mais puisse quand même établir une connexion avec un correspondant extérieur par l'intermédiaire du réseau domestique, à l'aide du mécanisme de mobilité pour rester connecté à une infrastructure IP. Le routeur du réseau domestique attribue alors une adresse IP appelée "Care-Of-Address", et dans ce cas, les terminaux du véhicule du visiteur ne sont pas configurés avec des adresses IP du plan d'adressage du réseau domestique et ne peuvent donc pas accéder à des services liés à ce plan d'adressage. Par contre, grâce à la fonction "Home Agent" présente dans leur réseau d'origine, ils peuvent maintenir leurs connexions et être joignables via le réseau domestique d'accueil.

Un autre exemple concerne par exemple un moyen de transport public (taxi, autobus, train, avion) équipé d'un réseau IP local. Lorsque le moyen de transport accueille un client doté d'un réseau personnel, il n'est en principe pas souhaitable que le réseau personnel du client soit intégré au réseau local du moyen de transport en bénéficiant d'une plage d'adresses du réseau local. Il est en effet préférable d'éviter que les clients puissent accéder à certaines informations de l'exploitant du moyen de transport. Dans ce cas, le routeur du moyen de transport attribue uniquement une adresse "Care-Of-Address" au réseau personnel du client, ce qui permet de mettre en oeuvre les mécanismes de mobilité faisant intervenir le "Home Agent" du routeur du client. En revanche, si le réseau personnel appartient à l'exploitant du moyen de transport, il est souhaitable qu'il soit intégré au réseau local par attribution d'un préfixe d'adresses IP. Dans ce cas, le routage entre le réseau personnel et le réseau IP public est effectué directement par le fournisseur d'accès utilisé par l'exploitant pour accéder au réseau public.

A l'heure actuelle, seul l'un ou l'autre de ces mécanismes, à savoir l'attribution d'une adresse unique ou la délégation de préfixe, peut être utilisé, aucun moyen n'étant prévu pour sélectionner l'un ou l'autre de ces mécanismes selon les circonstances.

La présente invention a pour but de supprimer ces inconvénients en proposant un moyen permettant à un réseau IP hôte de déterminer lors de la connexion d'un réseau IP visiteur, le mécanisme d'accès adéquat à mettre en oeuvre pour donner un accès au réseau visiteur. Cet objectif est atteint par la prévision d'un procédé d'accès d'un réseau visiteur à un réseau hôte, comprenant des étapes au cours desquelles un routeur du réseau visiteur se connecte à un routeur du réseau hôte et lui transmet un message de requête d'adresse.

Selon l'invention, le message de requête d'adresse contient un identifiant du routeur visiteur, le procédé comprenant en outre des étapes au cours desquelles le routeur hôte extrait du message de requête d'adresse reçu l'identifiant du routeur visiteur, et transmet en réponse au routeur visiteur un message d'attribution d'adresse contenant soit une adresse, soit un préfixe d'adresses du réseau hôte, en fonction de l'identifiant du routeur visiteur extrait du message de requête d'adresse.

Selon un mode de réalisation préféré de l'invention, le routeur hôte détermine durant la connexion du routeur visiteur au routeur hôte, s'il est autorisé à attribuer une adresse à un réseau visiteur, le routeur visiteur n'émettant un message de requête d'adresse que si le routeur hôte est autorisé à attribuer une adresse.

Selon un mode de réalisation préféré de l'invention, les identifiants de routeurs visiteurs pouvant recevoir un préfixe d'adresses du réseau hôte sont mémorisés dans une liste, le routeur hôte déterminant si le routeur visiteur peut recevoir un message d'attribution d'adresse contenant un préfixe d'adresses en recherchant dans la liste l'identifiant du routeur visiteur.

De préférence, le message d'attribution d'adresse contient un identifiant du routeur hôte.

L'invention concerne également un routeur hôte destiné à être connecté à un réseau hôte pour établir une liaison avec un réseau visiteur par l'intermédiaire d'un routeur visiteur, comprenant des moyens de traitement programmés pour recevoir un message de requête d'adresse émis par un routeur visiteur qui tente de se connecter au réseau hôte.

Selon l'invention, les moyens de traitement du routeur hôte sont conçus pour extraire de chaque message de requête d'adresse reçu un identifiant du routeur visiteur ayant émis le message de requête d'adresse, et pour émettre un message d'attribution d'adresse contenant soit une adresse, soit un préfixe d'adresses du réseau hôte, en fonction de l'identifiant de routeur extrait du message de requête d'adresse reçu.

Selon un mode de réalisation préféré de l'invention, les moyens de traitement du routeur hôte sont conçus pour accéder à une liste d'identifiants de routeurs visiteurs pouvant recevoir un préfixe d'adresses du réseau hôte pour déterminer si un routeur visiteur peut recevoir un message d'attribution d'adresse contenant un préfixe d'adresses du réseau hôte.

Selon un mode de réalisation préféré de l'invention, les moyens de traitement du routeur hôte sont conçus pour déterminer si l'accès au réseau hôte est autorisé, et pour refuser toute tentative de connexion d'un routeur visiteur sauf si l'accès au réseau hôte est autorisé.

Selon un mode de réalisation préféré de l'invention, les moyens de traitement du routeur hôte sont conçus pour insérer un identifiant dans le message d'attribution d'adresse.

L'invention concerne également un routeur visiteur destiné à être connecté à un réseau visiteur pour établir une liaison avec un réseau hôte par l'intermédiaire d'un routeur hôte, le routeur visiteur comprenant des moyens de traitement conçus pour émettre un message de requête d'adresse à destination du routeur hôte.

Selon l'invention, le routeur visiteur comprend des moyens pour mémoriser un identifiant, les moyens de traitement du routeur visiteur étant conçus pour insérer cet identifiant dans le message de requête d'adresse, pour recevoir en réponse au message de requête d'adresse un message d'attribution d'adresse contenant soit une adresse soit un préfixe d'adresses du réseau hôte, et pour établir une liaison avec le réseau hôte en utilisant l'adresse ou le préfixe d'adresses reçu.

L'invention concerne également un système pour l'accès d'un réseau visiteur à un réseau hôte, comprenant un routeur visiteur connecté au réseau visiteur, et un routeur hôte connecté au réseau hôte, les routeurs visiteur et hôte comprenant des moyens pour se connecter à un autre routeur, le routeur visiteur comportant des moyens de traitement conçus pour émettre un message de requête d'adresse à destination d'un autre routeur, et le routeur hôte comportant des moyens de traitement conçus pour recevoir un message de requête d'adresse provenant d'un autre routeur, les routeurs hôte et visiteur étant en outre tels que définis ci-avant.

L'invention concerne en outre un programme d'ordinateur d'accès d'un réseau visiteur à un réseau hôte comprenant des instructions de code de programme pour l'exécution de celles des étapes d'un des procédés définis ci-dessus et destinées à être exécutées par un routeur visiteur, lorsque ledit programme est exécuté sur le routeur visiteur

L'invention concerne par ailleurs un programme d'ordinateur d'accès d'un réseau visiteur à un réseau hôte comprenant des instructions de code de programme pour l'exécution de celles des étapes d'un des procédés définis ci-dessus et destinées à être exécutées par un routeur hôte, lorsque ledit programme est exécuté sur le routeur hôte.

L'invention concerne encore un support d'enregistrement lisible par un routeur et sur lequel est enregistré un programme tel que défini ci-dessus.

L'invention porte par ailleurs sur un message de requête d'adresse émis par un réseau visiteur à destination d'un réseau hôte et comprenant un identifiant d'un routeur dudit réseau visiteur.

Un mode de réalisation préféré de invention sera décrit ci-après, à titre d'exemple non limitatif, avec référence aux dessins annexés dans lesquels :
La figure 1 représente schématiquement un réseau visiteur connecté à un réseau hôte ;
La figure 2 représente schématiquement l'architecture d'un routeur ;
La figure 3 représente sous la forme d'un organigramme, une séquence d'étapes d'attribution d'adresse IP exécutée lors de la connexion d'un réseau visiteur à un réseau hôte.

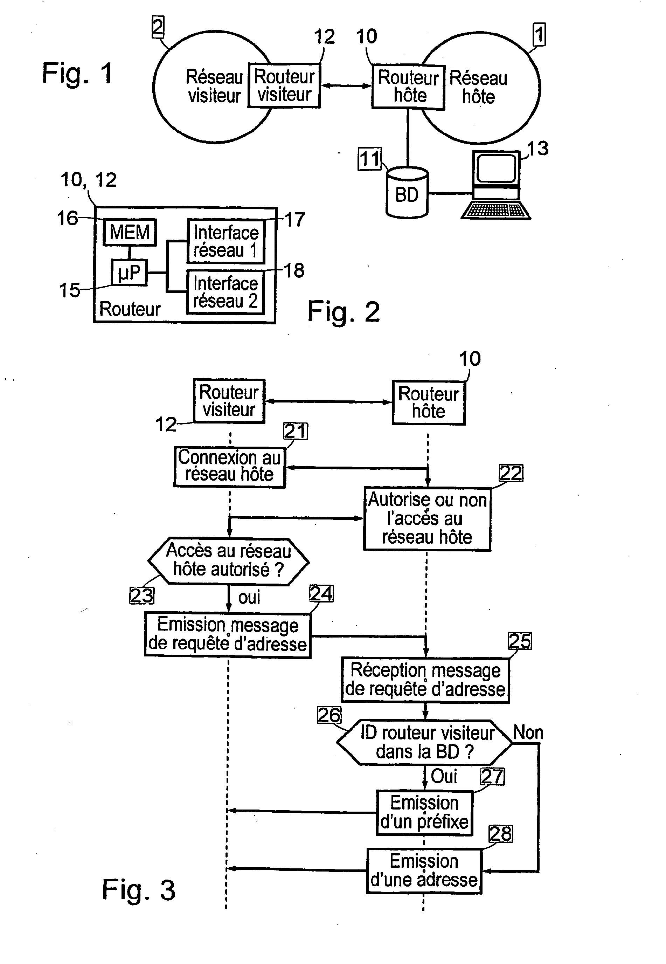

La figure 1 représente un réseau hôte 1 équipé d'un routeur hôte 10 auquel est connecté un réseau visiteur 2 par l'intermédiaire d'un routeur visiteur 12.

Selon l'invention, on attribue des identifiants de routeur, "Requestor-router-ID" et "Delegator-router-ID", respectivement pour le routeur visiteur 12 et le routeur hôte 10 permettant aux routeurs de s'identifier mutuellement.

Le routeur hôte 10 est par ailleurs relié à une base de données 11 dans laquelle sont mémorisés des identifiants de routeurs visiteurs autorisés à intégrer le réseau hôte 1 par attribution d'adresses IP de ce dernier. Cette base de données est tenue à jour à l'aide d'un terminal d'administrateur 13 du réseau hôte 1 qui peut ainsi autoriser ou refuser de nouveaux routeurs visiteurs. Cette base de données peut être centralisée (réseau de bus, taxi, ...)

L'attribution d'identifiants aux routeurs peut être effectuée par une configuration manuelle ou automatique, par carte à puce ou code à barres.

Sur la figure 2, les routeurs 10, 12 comprennent d'une manière classique un processeur 15, des mémoires 16, et des interfaces réseau 17, 18.

La figure 3 illustre une procédure de connexion d'un routeur visiteur 12 à un réseau hôte par l'intermédiaire d'un routeur hôte, le processeur 15 et les mémoires 16 des routeurs visiteur et hôte étant programmés pour mettre en oeuvre cette procédure. Au cours d'une première étape 21 de cette procédure, le routeur visiteur 12 tente de se connecter au routeur hôte 10. A l'étape suivante 22, le routeur hôte détermine si les accès au réseau hôte sont autorisés et en informe le routeur visiteur, par exemple en émettant à destination du routeur visiteur un message d'accord ou de refus. Cette disposition permet d'activer ou de désactiver la délégation automatique d'adresses de façon à pouvoir, le cas échéant, configurer manuellement les équipements et notamment les routeurs et éviter les sollicitations diverses que le routeur hôte pourrait avoir à traiter.

A l'étape suivante 23, si le message reçu du routeur hôte 10 est un refus d'accès au réseau hôte, la procédure se termine. Dans le cas contraire, le routeur visiteur 12 envoie à l'étape 24 un message de requête d'adresse contenant l'identifiant "Requestor-router-ID" du routeur 12. Ce message est par exemple de la forme "DHCP_Solicit" prévu par le protocole DHCP.

A l'étape suivante 25, le routeur hôte 10 reçoit ce message et en lit le contenu. Si à l'étape suivante 26, l'identifiant du routeur visiteur figure dans la base de données 11 comme étant autorisé à intégrer le réseau hôte 1, le routeur hôte 10 envoie à l'étape 27 au routeur visiteur 12 un préfixe d'adresses IP appartenant au réseau hôte, dans un message d'attribution d'adresse, par exemple "DHCP_Offer" prévu par le protocole DHCP. Dans le cas contraire, le message d'attribution d'adresse qui est envoyé par le routeur hôte au routeur visiteur à l'étape 28 contient une adresse IP à utiliser comme "Care-Of-Address" par le mécanisme de mobilité du routeur visiteur 12. Le préfixe d'adresses ou l'adresse insérés dans le message d'attribution d'adresse sont par exemple sélectionnés d'une manière classique dans un pool d'adresses ou de préfixes.

Le message "DHCP_Offer" contient également un champ "Delegator-router-ID" dans lequel le routeur hôte insère son identifiant pour que les routeurs puissent s'identifier lors d'échanges ultérieurs.

Dans le cadre du protocole DHCP, d'autres messages tels que "DHCP-Advertise", "DHCP-Request" et "DHCP-Reply" peuvent être utilisés.

Sachant que le protocole DHCP permet d'assurer une délégation de préfixe d'adresses IP, l'exemple décrit ci-avant s'appuie sur ce protocole. Cependant, on peut envisager dans le cadre de l'invention l'utilisation d'autres protocoles, tels que ICMP (Internet Control Message Protocol), voire une extension des messages "Router Advertisement" utilisés pour la fourniture d'un préfixe réseau.

Dans l'exemple décrit ci-avant, on considère en outre que le routeur hôte assure la délégation de préfixe d'adresses IP et donc assure la fonction de serveur DHCP. Cependant, on peut envisager que cette fonction soit assurée par des serveurs séparés.

Dans une variante de l'invention, la base de données 11 contient une liste d'identifiants de routeurs non autorisés à accéder au réseau hôte 1. L'étape 26 comprend alors une troisième alternative selon laquelle l'identifiant du routeur visiteur envoyé dans le message DHCP_Solicit appartient à cette liste. Si tel est le cas, le routeur hôte n'envoie pas au routeur visiteur une adresse ou un préfixe d'adresses et la procédure prend fin.

## Revendications

1. Procédé d'accès d'un réseau visiteur (2) à un réseau hôte (1), comprenant des étapes au cours desquelles un routeur (12) du réseau visiteur se connecte (21) à un routeur (10) du réseau hôte et lui transmet (24) un message de requête d'adresse,
**caractérisé en ce que** le message de requête d'adresse contient un identifiant du routeur visiteur (12), le procédé comprenant en outre des étapes au cours desquelles le routeur hôte (10) extrait du message de requête d'adresse reçu l'identifiant du routeur visiteur, et transmet (27, 28) en réponse au routeur visiteur un message d'attribution d'adresse contenant soit une adresse, soit un préfixe d'adresses du réseau hôte (1), en fonction de l'identifiant du routeur visiteur extrait du message de requête d'adresse.

2. Procédé selon la revendication 1,
**caractérisé en ce que**, durant la connexion du routeur visiteur (12) au routeur hôte (10), le routeur hôte détermine (22) s'il est autorisé à attribuer une adresse à un réseau visiteur (2), le routeur visiteur n'émettant un message de requête d'adresse que si le routeur hôte est autorisé à attribuer une adresse.

3. Procédé selon la revendication 1 ou 2,
**caractérisé en ce que** les identifiants de routeurs visiteurs (12) pouvant recevoir un préfixe d'adresses du réseau hôte (1) sont mémorisés dans une liste (11), le routeur hôte (10) déterminant si le routeur visiteur peut recevoir un message d'attribution d'adresse contenant un préfixe d'adresses en recherchant (25) dans la liste l'identifiant du routeur visiteur.

4. Procédé selon l'une des revendications 1 à 3,
**caractérisé en ce que** le message d'attribution d'adresse contient un identifiant du routeur hôte (10).

5. Routeur hôte (10) destiné à être connecté à un réseau hôte (1) pour établir une liaison avec un réseau visiteur (2) par l'intermédiaire d'un routeur visiteur (12), comprenant des moyens de traitement (15) programmés pour recevoir un message de requête d'adresse émis par un routeur visiteur qui tente de se connecter au réseau hôte,
**caractérisé en ce que** les moyens de traitement (15) du routeur hôte sont conçus pour extraire de chaque message de requête d'adresse reçu un identifiant du routeur visiteur (12) ayant émis le message de requête d'adresse, et pour émettre un message d'attribution d'adresse contenant soit une adresse, soit un préfixe d'adresses du réseau hôte (1), en fonction de l'identifiant de routeur extrait du message de requête d'adresse reçu.

6. Routeur hôte selon la revendication 5,
**caractérisé en ce que** les moyens de traitement (15) du routeur hôte sont conçus pour accéder à une liste d'identifiants de routeurs visiteurs (12) pouvant recevoir un préfixe d'adresses du réseau hôte (1) pour déterminer si un routeur visiteur peut recevoir un message d'attribution d'adresse contenant un préfixe d'adresses du réseau hôte (1).

7. Routeur hôte selon la revendication 5 ou 6,
**caractérisé en ce que** les moyens de traitement (15) du routeur hôte sont conçus pour déterminer si l'accès au réseau hôte (1) est autorisé, et pour refuser toute tentative de connexion d'un routeur visiteur (12) sauf si l'accès au réseau hôte est autorisé.

8. Routeur hôte selon l'une des revendications 5 à 7,
**caractérisé en ce que** les moyens de traitement (15) du routeur hôte sont conçus pour insérer un identifiant dans le message d'attribution d'adresse.

9. Routeur visiteur (12) destiné à être connecté à un réseau visiteur (2) pour établir une liaison avec un réseau hôte (1) par l'intermédiaire d'un routeur hôte (10), le routeur visiteur comprenant des moyens de traitement conçus pour émettre un message de requête d'adresse à destination du routeur hôte,
**caractérisé en ce qu'**il comprend des moyens (16) pour mémoriser un identifiant, les moyens de traitement (15) du routeur visiteur étant conçus pour insérer cet identifiant dans le message de requête d'adresse, pour recevoir en réponse au message de requête d'adresse un message d'attribution d'adresse contenant soit une adresse soit un préfixe d'adresses du réseau hôte (1), et pour établir une liaison avec le réseau hôte en utilisant l'adresse ou le préfixe d'adresses reçu.

10. Système pour l'accès d'un réseau visiteur (2) à un réseau hôte (1), comprenant un routeur visiteur (12) connecté au réseau visiteur, et un routeur hôte (10) connecté au réseau hôte (1), les routeurs visiteur et hôte comprenant des moyens (15, 17, 18) pour se connecter à un autre routeur, le routeur visiteur comportant des moyens de traitement conçus pour émettre un message de requête d'adresse à destination d'un autre routeur, et le routeur hôte comportant des moyens de traitement conçus pour recevoir un message de requête d'adresse provenant d'un autre routeur,
**caractérisé en ce que** le routeur hôte est conforme à l'une des revendications 5 à 8, et le routeur visiteur est conforme à la revendication 9.

11. Programme d'ordinateur d'accès d'un réseau visiteur (2) à un réseau hôte (1) comprenant des instructions de code de programme pour l'exécution de celles des étapes du procédé selon les revendications 1 à 4 destinées à être exécutées par un routeur visiteur, lorsque ledit programme est exécuté sur le routeur visiteur.

12. Support d'enregistrement lisible par un routeur sur lequel est enregistré le programme selon la revendication 11.

13. Programme d'ordinateur d'accès d'un réseau visiteur (2) à un réseau hôte (1) comprenant des instructions de code de programme pour l'exécution de celles des étapes du procédé selon les revendications 1 à 4 destinées à être exécutées par un routeur hôte, lorsque ledit programme est exécuté sur le routeur hôte.

14. Support d'enregistrement lisible par un routeur sur lequel est enregistré le programme selon la revendication 13.

## Claims

1. Method for a visitor network (2) to access to a host network (1), comprising steps during which a router (12) of the visitor network connects (21) to a router (10) of the host network and transmits (24) to it an address request message, **characterized in that** the address request message contains an identifier of the visitor router (12), the method also comprising steps during which the host router (10) extracts the visitor router identifier from the address request message received, and transmits (27, 28) in response to the visitor router an address allocation message containing either an address, or an address prefix of the host network (1), according to the identifier of the visitor router extracted from the address request message.

2. Method according to Claim 1, **characterized in that**, during the convection from the visitor router (12) to the host router (10), the host router determines (22) whether it is authorized to allocate an address to a visitor network (2), the visitor router sending an address request message only if the host router is authorized to allocate an address.

3. Method according to Claim 1 or 2, **characterized in that** the visitor router identifiers (12) able to receive address prefix of the host network (1) are stored in a list (11), the host router (10) determining whether the visitor router may receive an address allocation message containing an address prefix by searching (25) in the list for the identifier of the visitor router.

4. Method according to one of Claims 1 to 3, **characterized in that** the address allocation message contains an identifier of the host router (10) .

5. Host router (10) intended to be connected to a host network (1) in order to establish a link with a visitor network (2) by means of a visitor outer (12), comprising processing means (15) programmed to receive an address request message sent by a visitor router that is trying to connect to the host router,
**characterized in that** the processing means (15) of the host router are designed to extract from each address request message received an identifier of the visitor router (12) having sent the address request message, and to send an address allocation message containing either an address, or an address prefix of the host network (1), according to the router identifier extracted from the address bequest message received.

6. Host router according to Claim 5, **characterized in that** the processing means (15) of the host router are designed to access a list of identifiers of visitor routers (12) able to receive an address prefix of the host network (1) in order to determine whither a visitor router mary receive an address allocation message containing an address prefix of the host network (1).

7. Host router according to Claim 5 or 6, **characterized in that** the processing means (15) of the host router are designed to determine whether access to the host network (1) is authorised, and to refuse any connection attempt from a visitor router (12) unless access to the host network is authorized.

8. Host router according to one of Claims 5 to 7, **characterized in that** the professing means (15) of the host router are designed to insert an identifier into the address allocation message.

9. Visitor router (12) intended to be connected to a visitor network (2) in order to establish a link with a host network (1) by means of a host router (10), the visitor router comprising processing means designed to send an address request message to the host route, **characterized in that** it comprises means (16) for storing an identifier, the processing means (15) of the visitor router being designed to insert this identifier into the address request message, to receive in response to the address bequest message an address allocation message containing either an address or an address prefix of the host network (1) , and in order to establish a link with the host network by using the address or address prefix received.

10. System for access of a visitor network (2) to a host network (1), comprising a visitor router (12) connected to the visitor network, and a host router (10) connected to the host network (1), the visitor and host routers comprising means (15, 17, 18) for connecting to another router, the visitor router comprising processing means designed to send an address request message to another router, and the host router comprising processing means designed to receive an address request message originating from another router,
**characterized in that** the host router is in accordance with one of Claims 5 to 8, and the visitor router is in accordance with Claim 9.

11. Computer program for access of a visitor router (2) to a host router (1) comprising program code instructions for the execution of those of the steps of the method according to Claims 1 to 4 designed to be executed by a visitor route, when the said grogram is execute on the visitor router.

12. Recording medium that can be read by a router on which the program according to Claim 11 is recorded.

13. Computer program for access of a visitor router (2) to a host network (1) comprising program code instructions for the execution of those of the steps of the method according to Claims 1 to 4 designed to be executed by a host router, when the said program is executed on the host router.

14. Recording medium that can be read by a router on which the program according to Claim 13 is recorded.

## Patentansprüche

1. Verfahren für den Zugang eines Gastnetzwerks (2) zu einem Hostnetzwerk (1), das Schritte aufweist, während denen ein Router (12) des Gastnetzwerks sich mit einem Router (10) des Hostnetzwerks verbindet (21) und an diesen eine Adressenanforderungsmitteilung überträgt (24),
**dadurch gekennzeichnet, dass** die Adressenanforderungsmitteilung eine Kennung des Gastrouters (12) enthält, wobei das Verfahren weiter Schritt aufweist, während denen der Hostrouter (10) aus der empfangenen Adressenanforderungsmitteilung die Kennung des Gastrouters entnimmt und als Antwort an den Gastrouter eine Adressenzuweisungsmitteilung überträgt (27, 28), die in Abhängigkeit von der aus der Adressenanforderungsmitteilung entnommenen Kennung des Gastrouters entweder eine Adresse oder ein Adressenpräfix des Hostnetzwerks (1) enthält.

2. Verfahren nach Anspruch 1, **dadurch gekennzeichnet, dass** während der Verbindung des Gastrouters (12) mit dem Hostrouter (10) der Hostrouter bestimmt (22), ob er berechtigt ist, einem Gastnetzwerk (2) eine Adresse zuzuweisen, wobei der Gastrouter nur dann eine Adressenanforderungsmitteilung sendet, wenn der Hostrouter berechtigt ist, eine Adresse zuzuweisen.

3. Verfahren nach Anspruch 1 oder 2, **dadurch gekennzeichnet, dass** die Kennungen der Gastrouter (12), die ein Adressenpräfix des Hostnetzwerks (1) empfangen können, in einer Liste (11) gespeichert werden, wobei der Hostrouter (10) bestimmt, ob der Gastrouter eine Adressenzuweisungsmitteilung empfangen kann, die ein Adressenpräfix enthält, indem er in der Leiste die Kennung des Gastrouters sucht (25).

4. Verfahren nach einem der Ansprüche 1 bis 3, **dadurch gekennzeichnet, dass** die Adressenzuweisungsmitteilung eine Kennung des Hostrouters (10) enthält.

5. Hostrouter (10), der dazu bestimmt ist, mit einem Hostnetzwerk (1) verbunde zu werden, um seine Verbindung mit einem Gastnetzwerk (2) über einen Gastrouter (12) auszubauen, mit Verarbeitungsmitteln (15), die programmiert sind, um eine von einem Gastrouter, der versucht, sich mit dem Hostnetzwerk zu verbinden, gesendete Adressenanforderungsmitteilung zu empfangen,
**dadurch gekennzeichnet, dass** die Verarbeitungsmittel (15) des Hostrouters konzipiert sind, um aus jeder empfangenen Adressenanforderungsmitteilung eine Kennung des Gastrouters (12) zu entnehmen, der die Adressenanforderungsmitteilung gespendet hat, und um abhängig von der aus der empfangenen Adressenanforderungsmitteilung entnommenen Routerkennung eine Adressenzuweisungsmitteilung zu senden, die entweder eine Adresse oder ein Adressenpräfix des Hostnetzwerks (1) enthält.

6. Hostrouter nach Anspruch 5, **dadurch gekennzeichnet, dass** die Verarbeitungsmittel (15) des Hostrouters konzipiert sind, um auf eine Liste von Kennungen von Gastroutern (12) zuzugreifen, die ein Adressenpräfix des Hostnetzwerks (1) empfangen können, um zu bestimmten, ob ein Gastrouter eine Adressenzuweisungsmitteilung empfangen kann, die ein Adressenpräfix des Hostnetzwerks (1) enthält.

7. Hostrouter nach Anspruch 5 oder 6, **dadurch gekennzeichnet, dass** die Verarbeitungsmittel (15) des Hostrouters konzipiert sind, um zu bestimmen, ob der Zugang zum Hostnetzwerk (1) berechtigt ist, und um jeden Verbindungsversuch eines Gastrouters (12) zu verweigern, außer wenn der Zugang zum Hostnetzwerk berechtigt ist.

8. Hostrouter nach einem der Ansprüche 5 bis 7, **dadurch gekennzeichnet, dass** die Verarbeitungsmittel (15) des Hostrouters konzipiert sind, um eine Kennung in die Adressenzuweisungsmitteilung einzufügen.

9. Gastrouter (12), der dazu bestimmt ist, mit eine Gastnetzwerk (2) verbunde zu werden, um eine Verbindung mit einem Hostnetzwerk (1) über einen Hostrouter (10) auf zubauen, wobei der Gastrouter Verarbeitungsmittel aufweist, die konzipiert sind, um eine Adressenanforderungsmitteilung an den Hostrouter zu senden,
**dadurch gekennzeichnet, dass** er Mittel (16) aufweist, um eine Kennung zu speichern, wobei die Verarbeitungsmittel (15) des Gastrouters konzipiert sind, um diese Kennung in die Adressenanforderungsmitteilung einzufügen, um als Antwort auf die Adressenanforderungsmitteilung eine Adressenzuweisungsmitteilung zu empfangen, die entweder eine Adresse ober ein Adressenpräfix des Hostnetzwerks (1) enthält, und um eine Verbindung mit dem Hostnetzwerk unter Verwendung der empfangenen Adresse oder des empfangenen Adressenpräfix aufzubauen

10. System für den Zugang eines Gastnetzwerks (2) zu einem Hostnetzwerk (1), das einen mit dem Gastnetzwerk verbundene Gastrouter (12) und einen mit dem Hostnetzwerk (1) verbundene Hostrouter zu aufweist, wobei der Gastrouter und der Hastrouter Mittel (15 , 17, 18) aufweisen, um sich mit einem anderen Router zu verbinden, wobei der Gastrouter Verarbeitungsmittel aufweist, die konzipiert sind, um eine Adressenanforderungsmitteilung an einen anderen Router zu senden, und der Hostrouter Verarbeitungsmittel aufweist, die konzipiert sind, um eine von einem anderen Router kommende Adressenanforderungsmitteilung zu empfangen,
**dadurch gekennzeichnet, dass** der Hostrouter einem der Absprüche 5 bis 8 entspricht und der Gastrouter dem Anspruch 9 entspricht.

11. Computerprogramm für den Zugang eines Gastnetzwerks (2) zu einem Hostnetzwerk (1), das Programmeodeanweisungen für die Ausführung derjenigen der Schritte des Verfahrens nach den Ansprüchen 1 bis 4 enthält, die dazu bestimmt sind, von einem Gastrouter ausgeführt zu werden, wenn das Programme auf dem Gastrouter aufgeführt wird.

12. Von einem Router lesbarer Aufzeichnungsträger, auf dem das Programm gemäß Anspruch 11 ausgezeichnet ist.

13. Computerprogramm für den Zugang eines Gastnetzwerks (2) zu einem Hostnetzwerk (1), das Prograrnrncodeanweisungen für die Ausführungen derjenigen der Schritte des Verfahrens nach den Ansprüchen 1 bis 4 enthält, die dazu bestimmt sind, von einem Hostrouter ausgeführt zu werden, wenn das Programme auf dem Hostrouter ausgeführt wird.

14. Von einem Router lesbarer Aufzeichnungsträger, auf dem das Programm gemäß Anspruch 13 aufgezeichnet ist.
